# EUROPÄISCHE PATENTSCHRIFT

(11) **EP 4 338 244 B1**
(45) Veröffentlichungstag und Bekanntmachung des Hinweises auf die Patenterteilung: **06.05.2026**
(21) Anmeldenummer: 22718680.6
(22) Anmeldetag: 28.03.2022
(51) Int. Cl.: H01T 13/20, H01T 13/32, H01T 13/54

(54) **ZÜNDKERZE MIT KLEINEM ELEKTRODENABSTAND UND MINDESTENS TEILWEISER NEGATIVER FUNKENLAGE**
SPARK PLUG HAVING A SMALL INTER-ELECTRODE DISTANCE AND AN AT LEAST PARTLY NEGATIVE SPARK POSITION
BOUGIE D'ALLUMAGE PRÉSENTANT UNE PETITE DISTANCE INTER-ÉLECTRODES ET UNE POSITION D'ALLUMAGE AU MOINS PARTIELLEMENT NÉGATIVE

(30) Priorität: 11.05.2021 DE 102021204744
(43) Veröffentlichungstag der Anmeldung: 20.03.2024
(73) Patentinhaber: Robert Bosch GmbH, 70442 Stuttgart (DE)
(72) Erfinder: SUBKOW, Sergej, 70806 Kornwestheim (DE); BLANKMEISTER, Matthias, 42579 Heiligenhaus (DE); SEELIG, Alexander, 73249 Wernau (Neckar) (DE)
(86) Internationale Anmeldenummer: PCT/EP2022/058084
(87) Internationale Veröffentlichungsnummer: WO 2022/238038

(56) Entgegenhaltungen:
- DE-A1- 102004 050 291
- DE-A1- 102010 004 851
- DE-A1- 102019 122 976
- US-A1- 2012 299 459
- US-A1- 2013 206 122

## Beschreibung

### Stand der Technik

Die Erfindung betrifft eine Zündkerze gemäß des Anspruchs 1. Insbesondere ist die erfindungsgemäße Zündkerze für die Anwendung bei einem mit Wasserstoff betriebenen Motor geeignet.

Bisher werden die meisten Fahrzeuge, wie z.B. PKW oder LKW, mit einem Verbrennungsmotor angetrieben, der Benzin oder Diesel als Treibstoff verwenden. Zunehmend gibt es mobile und stationäre Verbrennungsmotoren, die Erdgas oder Wasserstoff als Treibstoff benutzten. Dabei muss wie beim Benzin-betriebenen Verbrennungsmotor auch beim Wasserstoff-betriebenen Verbrennungsmotor das Luft-Kraftstoff-Gemisch fremdgezündet werden. Hierzu wird typischerweise eine Zündkerze eingesetzt.

### Offenbarung der Erfindung

Bei Wasserstoff-betriebenen Verbrennungsmotoren wird in der Regel ein sehr mageres Luft-Kraftstoff-Gemisch (Lambda > 1,8) eingestellt, um die gesetzliche Emission-Vorgaben zu erfüllen. Gemeinsam mit dem niedrigen Gemisch-Heizwert von Wasserstoff ergeben sich dadurch höhere Ladungsdichten und entsprechend auch höhere Drücke zum Zündzeitpunkt. Weitere Besonderheiten bei der Wasserstoffverbrennung in einem Verbrennungsmotor ist das Zusammenspiel zwischen Selbstzündungstemperatur und minimal benötigter Zündenergie. Daraus ergibt sich, dass für die Anwendung bei einem Wasserstoff betriebenen Verbrennungsmotor eine "kalte Zündkerze" benötigt wird, d.h. man benötigt eine Zündkerze mit einem sehr niedrigen Wärmewert. Nach Bosch Nomenklatur bedeutet dies, dass die Zündkerze vorzugweise einen Wärmewert von kleiner oder gleich 3 hat. Bisher bekannte Zündkerzen sind in der Regel auf den Betrieb in einem Benzin-betriebenen Verbrennungsmotor optimiert und sind somit nicht geeignet für die Anwendung bzw. liefern eine schlechte Performanz bei der Anwendung in Wasserstoff-betriebenen Verbrennungsmotoren.

DE 10 2004 050291 A1 offenbart eine Zündkerze gemäß dem Oberbegriff des Anspruchs 1.

Entsprechend ist es Aufgabe der Erfindung eine Zündkerze bereit zu stellen, die die Anforderungen an eine Zündkerze bei einer Anwendung in einem Wasserstoff-betriebenen Verbrennungsmotor erfüllt.

Diese Aufgabe wird bei der erfindungsgemäßen Zündkerze der eingangs genannten Art dadurch gelöst, dass der Elektrodenabstand der Mittelelektrode zu der mindestens einen Masseelektrode nicht größer als 0,4 mm ist, und dass der Zündspalt mindestens teilweise innerhalb des Gehäuses ausgebildet ist.

Die erfindungsgemäße Zündkerze mit einer Längsachse weist ein Gehäuse mit einer Bohrung entlang dieser Längsachse auf, wobei aufgrund der Bohrung das Gehäuse eine Innenseite und eine Außenseite hat. Das Gehäuse hat eine brennraumseitige Stirnseite, die das brennraumseitige Ende der Zündkerze ist. Die Zündkerze weist keine Kappe an der brennraumseitigen Stirnseite des Gehäuses auf.

Mindestens teilweise ist innerhalb des Gehäuses ein Isolator angeordnet. Der Isolator weist eine Bohrung entlang seiner Längsachse auf. An seinem brennraumseitigen Ende weist der Isolator eine brennraumseitige Stirnfläche und einen Isolatorfuß auf. Der Isolatorfuß erstreckt sich von der brennraumseitigen Stirnfläche des Isolators bis zu einer Isolatorfußkehle. Die Isolatorfußkehle bildet den Übergang zwischen dem Isolatorfuß und einem Isolatorsitz. Mit dieser Isolatorsitz liegt der Isolator auf dem Gehäuse auf. Mindestens teilweise ist innerhalb des Isolators eine Mittelelektrode angeordnet. Das brennraumseitige Ende der Mittelelektrode beispielsweise ragt aus dem Isolator heraus. Die Zündkerze weist auch mindestens eine Masselelektrode auf, die am Gehäuse angeordnet ist, wobei die mindestens eine Masselelektrode und die Mittelelektrode so angeordnet sind, dass die mindestens eine Masselelektrode mit der Mittelelektrode einen Zündspalt ausbildet. Dabei ergibt sich eine Breite des Zündspalts durch einen Elektrodenabstand der Mittelelektrode zu der mindestens einen Masseelektrode.

Erfindungsgemäß ist vorgesehen, dass der Zündspalt einen Elektrodenabstand von nicht größer als 0,4 mm hat. Dies hat den Vorteil, dass weniger Spannung für eine Zündung benötigt wird und der Elektrodenabstandzuwachs über die Laufzeit der Zündkerze kleiner ausfällt. Da der Bauraum innerhalb des Gehäuses naturgemäß begrenzt ist, ergibt sich durch den kleinen Elektrodenabstand des Weiteren vorteilhaft die Möglichkeit die Elektroden und damit auch den Zündspalt mindestens teilweise innerhalb des Gehäuses anzuordnen. Dadurch ergibt sich der Vorteil, dass die Elektroden nicht soweit in den Brennraum hineinragen und somit weniger Wärme aus dem Brennraum aufnehmen. Damit ergibt sich, dass die Zündkerze insgesamt weniger Wärme aufnimmt und eine kalte Zündkerze ist, so dass unerwünschte Selbstzündung vermieden wird. Diese Kombination der beiden erfindungsgemäßen Merkmale ist somit besonders vorteilhaft.

Weitere vorteilhafte Ausgestaltungen der Erfindung sind Gegenstand der Unteransprüche.

Vorteilhafterweise ist beispielsweise der Elektrodenabstand nicht größer als 0,2 mm, insbesondere nicht größer als 0,15 mm. Je kleiner der Elektrodenabstand umso geringer ist der Spannungsbedarf für die Erzeugung eines Zündfunkens.

Es ist auch vorteilhaft, dass der Elektrodenabstand mindestens 0,05 mm ist, insbesondere nicht kleiner als 0,1 mm ist. Damit ergibt sich, dass der Elektrodenabstand nicht zu klein ist. Ein sehr kleiner Elektrodenabstand stellt besondere Herausforderungen an die Genauigkeit bei der Zündkerzen-Produktion. Eine Abweichung von der möglichst parallelen Ausrichtung der Elektroden-Zündflächen hat bei einem kleinen Elektrodenabstand größere Auswirkung, wie beispielsweise einen ungleichmäßigen Verschleiß der Zündfläche, als bei einem größeren Elektrodenabstand. Die Untergrenze für den Elektrodenabstand ist somit ein guter Kompromiss für einerseits einen kleinen Elektrodenabstand zur Reduzierung des Zündspannungsbedarfes und des Verschleißes und anderseits einen vertretbaren Aufwand für eine gleichmäßige gute Qualität der Ausrichtung der Zündflächen zueinander bei der Zündkerzen-Produktion.

Bei einer weiteren vorteilhaften Ausgestaltung der erfindungsgemäßen Zündkerze hat der Zündspalt einen Abstand zur brennraumseitigen Stirnseite des Gehäuses von mindestens 0 mm und maximal -15 mm, insbesondere von nicht kleiner als -1 mm und/oder nicht größer als -4 mm. Dabei ist eine von der brennraumseitigen Stirnseite des Gehäuses aufgespannte Ebene senkrecht zur Längsachse der Zündkerze eine Referenzebene mit dem Wert 0 mm. Der Abstand von der Referenzebene nimmt in Richtung des brennraumabgewandten Endes der Zündkerze einen zunehmend negativen Wert und in Richtung Brennraum einen zunehmenden positiven Wert an.

Der Zündspalt ist das Volumen zwischen der Masseelektrode und der Mittelelektrode, das sich zwischen den sich überdeckenden Projektionen der sich gegenüberstehenden Zündflächen der Elektroden aufeinander ergibt. D.h. die Zündfläche der Mittelelektrode wird auf die Zündfläche Masseelektrode projiziert und umgekehrt. Das Volumen, das beiden Projektionen überstreichen, ist das Volumen des Zündspalts. Dabei ist das Volumen in einer Dimension durch die Zündflächen begrenzt und in den anderen Dimensionen durch die projizierte Überdeckung der Zündflächen aufeinander begrenzt. Der Abstand wird vom brennraumseitigen Ende des Zündspalts zur brennraumseitigen Stirnseite des Gehäuses gemessen.

Das Merkmal, dass der Abstand des Zündspalts zur brennraumseitigen Stirnseite des Gehäuses mindestens 0 mm ist, bedeutet, dass der Zündspalt vollständig innerhalb des Gehäuses angeordnet ist, sprich die Zündkerze hat eine neutrale bzw. eine negative Funkenlage. Dies hat den Vorteil, dass die Elektroden möglichst weit aus dem Brennraum herausgezogen sind und somit möglichst wenig Wärme aus den im Brennraum stattfindenden Verbrennungsprozessen aufnehmen. Damit ist es möglich eine möglichst kalte Zündkerze zu erhalten.

Eine weitere vorteilhafte Maßnahme für eine möglichst kalte Zündkerze ist es den Isolatorfuß möglichst kurz auszulegen. Es hat sich als vorteilhaft herausgestellt, dass der Isolatorfuß eine Länge hat, die nicht länger als 7 mm ist, insbesondere nicht länger als 4 mm ist. Dabei wird die Länge des Isolatorfußes parallel zu Längsachse der Zündkerze gemessen.

Je kürzer der Isolatorfuß ist umso weniger ragt er in den Atmungsraum der Zündkerze. Der Atmungsraum der Zündkerze ist mit dem im Brennraum vorhandenen Gas-Gemisch gefüllt. Je weniger der Isolatorfuß in den in den Atmungsraum ragt umso weniger Kontaktfläche hat der Isolatorfuß mit dem heißen Gas-Gemisch und kann entsprecht weniger Wärme vom Gas-Gemisch aufnehmen.

Bei einer weiteren vorteilhaften Ausgestaltung ragt die Mittelelektrode aus dem Isolator heraus. Dabei hat die Mittelelektrode ein Vorstehmaß, das von der brennraumseitigen Stirnfläche des Isolators bis zu einem brennraumseitigen Ende der Mittelelektrode gemessen wird. Das Vorstehmaß der Mittelelektrode ist nicht größer als 6,0 mm, insbesondere nicht größer als 4,0 mm, und insbesondere nicht kleiner ist als 0,5 mm, vorzugsweise nicht kleiner als 1,1 mm.

Die Begrenzung des Vorstehmaß auf eine maximale Länge von 6,0mm hat den Vorteil, dass die Mittelelektrode nicht zu weit in den Atmungsraum ragt und somit nicht so viel Wärme von dem Gas-Gemisch im Atmungsraum aufnehmen kann, so dass die Zündkerze einen kleinen Wärmewert hat. Der Vorteil von der minimalen Länge des Vorstehmaß ist, dass bei einer Mindestlänge von 0,5 mm, der Abstand zur brennraumseitigen Stirnfläche des Isolators groß genug ist um bei seitlich radialer Einstellung der Masseelektroden in Bezug auf die Mittelelektrode die Gleitfunken entlang des Isolators auszuschließen.

Die Zündkerze weist einen Atmungsraum auf, der sich von der brennraumseitigen Stirnseite des Gehäuses bis zur Isolatorfußkehle innerhalb des Gehäuses erstreckt, wobei die Mittelelektrode und der Isolatorfuß innerhalb des Atmungsraums und die mindestens eine Masseelektrode mindestens teilweise, insbesondere vollständig, innerhalb des Atmungsraums angeordnet sind. Insbesondere steht der Atmungsraum in der durch die Gehäuse-Stirnseite senkrecht zur Längsachse der Zündkerze aufgespannte Ebene mit einem Brennraum im Kontakt, wenn die Zündkerze in einem Verbrennungsmotor eingebaut ist. Vorteilhafterweise ist vorgesehen, dass der Atmungsraum ein Volumen von nicht größer als 500 mm³, insbesondere von nicht größer als 300 mm³, und insbesondere nicht kleiner als 50 mm³. Bei der Berechnung des Volumens wird das Volumen der Elektroden und des Isolators nicht mitgerechnet.

Durch die Begrenzung des Atmungsraum-Volumens ergibt sich der Vorteil, dass der Atmungsraum nicht zu groß ist und somit sich gut mit einem frischen Gas-Gemisch spülen lässt, damit sich nicht zu viel durch die Zündung verbrauchtes Gas-Gemisch im Atmungsraum ansammelt. Einerseits werden dadurch die Ablagerung von bei einer Verbrennung entstandene Partikel, wie Ruß, vermieden und andererseits hat ein frisches Gas-Gemisch eine geringere Temperatur als ein verbrauchtes Gas-Gemisch, damit wird der Wärmeeintrag in die Zündkerze über den Atmungsraum reduziert.

Bei einer vorteilhaften Weiterentwicklung ist vorgesehen, dass der Isolatorfuß und/oder die Innenseiten des Gehäuses eine Kontur aufweist, die sich durch eine Verrundung mit nichtkonstantem Radius ergibt. Bevorzug hat die Verrundung zwei Schenkel mit unterschiedlichen Schenkellängen, die sich durch die Projektion der Verrundung in eine erste und eine zweite Richtung ergibt, wobei die Richtungen und damit auch die Schenkellängen senkrecht zu einander stehen. Durch diese Verrundungen am Isolatorfuß und/oder an der Innenseite des Gehäuses kann die Strömung des Gas-Gemisches beeinflusst werden. Bevorzugt wird die Kontur und Position der Verrundung so gewählt, dass der Atmungsraum zwischen zwei Zündvorgängen gut gespült wird. Besonders vorteilhaft ist es natürlich, wenn die Konturen des Isolatorfußes und der Innenseite des Gehäuses im Atmungsraum aufeinander abgestimmt sind.

Bei einer vorteilhaften Weiterentwicklung der Erfindung ist vorgesehen, dass die Zündkerze mindestens zwei Masseelektroden aufweist, die jeweils einen Zündspalt mit der Mittelelektrode ausbilden, wobei die mehreren Masseelektrode in Bezug auf die Mittelelektrode gleich oder unterschiedlich angeordnet sind, d.h. die Zündspalte können gleich oder unterschiedlich sein, aber bevorzugt erfüllen alle Zündspalte die hier aufgeführten vorteilhaften Merkmale, wie Position in Relation zur brennraumseitigen Stirnseite des Gehäuses und Elektrodenabstand.

Dadurch, dass die Zündkerze mehrere Masseelektroden hat, kann der Verschleiß der Zündfläche auf mehrere Masseelektroden verteilt werden und die Zündfläche der einzelnen Masseelektrode benötigt nicht so viel Volumen aus einem verschleißresistenten Material wie bei einer einzigen Masseelektrode. Die Lebensdauer der Zündkerze wird erhöht.

Bei einer besonders vorteilhaften Ausgestaltung der Erfindung sind die mindestens zwei Masseelektroden symmetrisch an der Innenseite des Gehäuses angeordnet. Dabei ist die Längsachse der Zündkerze die Symmetrieachse bei der Anordnung der Masseelektroden. Aufgrund der symmetrischen Anordnung der Masseelektroden ergibt sich der technische Effekt, dass die Strömung des Kraftstoff-Luft-Gemisches innerhalb des Atmungsraum sehr gleichmäßig erfolgt, wodurch eine gute Entflammung und eine gute Entflammungsstabilität des Kraftstoff-Luft-Gemisches in der Zündkerze weiter begünstigt wird.

Beispielsweise weist vorteilhafterweise die mindestens eine Masseelektrode und/oder die Mittelelektrode je eine Zündfläche aus einem anderen Material als die restliche Elektrode auf, die mit der gegenüberliegenden Elektrode den Zündspalt bilden, und dass die Zündfläche(n) aus einem Edelmetall oder einer Edelmetalllegierung besteht, insbesondere aus Pt, Ir, Rh, Pd, Re, Au oder einer Legierung daraus. Besonders vorteilhaft ist hier eine Legierung mit einem hohen Ir-Anteil, sprich Ir ist das Element mit dem höchsten Einzelanteil in der Legierung. Diese Elemente bzw. Legierung mit diesen Elementen sind besonders verschleißresistent.

Die erfindungsgemäße Zündkerze und ihre Weiterentwicklung ist beispielsweise eine Wasserstoff-Zündkerze, die dazu eingerichtet ist in einem mit Wasserstoff enthaltenden Kraftstoff betriebenen Motor eingesetzt zu werden und das zündfähige Wasserstoff enthaltende Kraftstoff-Luft-Gemisch zu zünden. Der Kraftstoff kann bis zu 100% Wasserstoff enthalten, sprich der Kraftstoff kann nur Wasserstoff oder eine Wasserstoff-Gas-Gemisch sein.

Allerdings ist die erfindungsgemäße Zündkerze nicht auf den Betrieb mit Wasserstoff beschränkt. Die erfindungsgemäße Zündkerze kann auch für Erdgas- oder Benzin-Verbrennungsmotoren verwendet werden.

### Zeichnung

Figur 1 zeigt ein Beispiel für eine erfindungsgemäße Zündkerze
Figur 2 zeigt ein zweites Beispiel für eine erfindungsgemäße Zündkerze

### Beschreibung des Ausführungsbeispiels

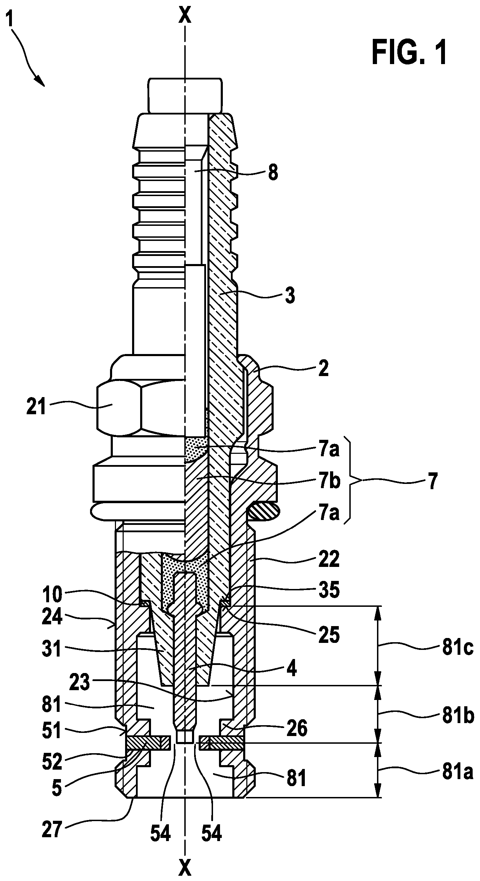

Figur 1 zeigt in einer halb geschnittenen Ansicht eine Zündkerze 1. Die Zündkerze 1 umfasst ein Gehäuse 2. In das Gehäuse 2 ist ein Isolator 3 eingesetzt. Das Gehäuse 2 und der Isolator 3 weisen jeweils entlang ihrer Längsachse eine Bohrung auf. Das Gehäuse 2 hat eine Außenseite 24 und eine Innenseite 23. Die Längsachse des Gehäuses 2, die Längsachse des Isolators 3 und die Längsachse x der Zündkerze 1 fallen zusammen. In den Isolator 3 ist eine Mittelelektrode 4 eingesetzt. Des Weiteren erstreckt sich in den Isolator 3 ein Anschlussbolzen 8 zur elektrische Kontaktierung der Zündkerze, über diese wird die Zündkerze 1 mit einer Spannungsquelle elektrisch kontaktiert. Die elektrische Kontaktierung bildet das Brennraum-abgewandte Ende der Zündkerze 1. Die elektrische Kontaktierung kann einstückig, wie in diesem Beispiel, oder auch aus mehreren Komponenten ausgebildet sein.

Der Isolator 3 wird typischerweise in drei Bereich unterteilt: Isolatorfuß 31, Isolatorkörper und Isolatorkopf. Die drei Bereiche unterscheiden sich beispielsweise durch unterschiedliche Durchmesser. Der Isolatorfuß 31 ist das Brennraum-zugewandte Ende des Isolators 3. Innerhalb des Isolatorfußes 31 ist die Mittelelektrode 4 angeordnet. Der Isolatorfuß 31 ist hier vollständig innerhalb des Gehäuses 2 angeordnet. In der Regel hat der Isolatorfuß 31 den kleinsten Außendurchmesser am Isolator 3. Der Isolatorfuß hat hier eine Länge 81c von maximal 7 mm.

Angrenzend an den Isolatorfuß 31 ist der Isolatorkörper angeordnet, der in der Regel vollständig vom Gehäuse 2 umfasst ist. Der Isolatorkörper hat einen größeren Außendurchmesser als der Isolatorfuß 31. Der Übergang zwischen Isolatorfuß 31 und Isolatorkörper ist als Schulter, dem sogenannten Isolatorsitz 35, ausgebildet. Der Übergang zwischen Isolatorsitz 35 und Isolatorfuß 31 wird als Isolatorfußkehle bezeichnet.

Der Isolatorkopf grenzt am Brennraum-abgewandten Ende des Isolatorkörpers an und bildet das Brennraum-abgewandte Ende des Isolators 3. Der Isolatorkopf ragt aus dem Gehäuse 2 heraus. Der Außendurchmesser des Isolatorkopfs liegt zwischen den Außendurchmessern von Isolatorfuß 31 und Isolatorkörper, wobei die Bereiche typischerweise über ihre Länge keinen konstanten Außendurchmesser haben, sondern der Außendurchmesser variieren kann.

Das Gehäuse 2 weist an seiner Innenseite einen Sitz 25 auf. Der Isolator liegt mit seiner Schulter bzw. Isolatorsitz 35 auf dem Gehäuse-Sitz 25 auf. Zwischen dem Isolatorsitz 35 und dem Gehäuse-Sitz 25 ist eine Innendichtung 10 angeordnet.

Zwischen der Mittelelektrode 4 und dem Anschlussbolzen 8 zur elektrische Kontaktierung der Zündkerze befindet sich im Isolator 3 ein Widerstandselement 7. Das Widerstandselement 7 verbindet die Mittelelektrode 4 elektrisch leitend mit dem Anschlussbolzen 8. Das Widerstandselement 7 ist beispielsweise als Schichtsystem aus einer ersten Kontaktschicht 7a, einer Widerstandsschicht 7b und einer zweiten Kontaktschicht 7a aufgebaut. Die Schichten des Widerstandselements unterscheiden sich durch ihre Materialzusammensetzung und dem daraus resultierenden elektrischen Widerstand. Die erste Kontaktschicht 7a und die zweite Kontaktschicht 7a können einen unterschiedlichen oder einen gleichen elektrischen Widerstand aufweisen.

An der Innenseite 23 des Gehäuses 2 sind in diesem Beispiel zwei Masseelektroden 5 in jeweils einer Bohrung 52 angeordnet, so dass die Masseelektroden 5 radial von der Gehäuse-Innenseite 23 in die Bohrung entlang der Längsachse X des Gehäuses 2 hineinragen. Die Masseelektroden 5 und die Mittelelektrode 4 bilden zusammen jeweils einen Zündspalt 54 aus. Der jeweilige Zündspalt zwischen der Mittelelektrode und der jeweiligen Masseelektrode erstreckt sich radial zur Längsachse x. Die Breite des jeweiligen Zündspalts 54 ist der Elektrodenabstand und liegt im Bereich von 0,05 mm bis 0,4 mm. Die Bohrungen 52 erstrecken sich von der Außenseite 24 durch die Gehäusewand bis zur Innenseite 23 des Gehäuses 2.

Alternative könnten die zwei Masseelektroden 5 auch an der brennraumseitigen Stirnseite 27 des Gehäuses 2 angeordnet sein.

Alternativ kann die Zündkerze 1 auch mehr als nur eine oder mehr als zwei Masseelektroden 5 aufweisen.

Es gibt in diesem Beispiel gemäß Figur 1 jeweils eine Zündspalt 54 zwischen der Mittelelektrode 4 und den zwei Masseelektroden 5. Dabei überdecken sich die Projektionen der jeweiligen Zündfläche der Mittelelektrode 4 und je eine Masseelektrode 5 nicht vollständig. Das brennraumseitige Ende des Zündspalts liegt in einer Ebene senkrecht zur Längsachse x mit der brennraumseitigen Stirnfläche der Mittelelektrode 4. Der Abstand 81a des Zündspalts zur von der brennraumseitigen Stirnseite 27 des Gehäuses 2 senkrecht zur Längsachse x aufgespannte Ebene ist hier größer als 0 und gleich oder kleiner als -15 mm.

Die Mittelelektrode 4 ragt aus dem Isolatorfuß 31 heraus und hat ein Vorstehmaß 81b von mindesten 0,5 mm bis maximal 6,0mm.

Das Gehäuse 2 weist einen Schaft auf. An diesem Schaft sind ein Mehrkant 21, ein Schrumpfeinstich und ein Gewinde 22 ausgebildet. Das Gewinde 22 dient zum Einschrauben der Zündkerze 1 in einen Motor.

Die Bohrungen 52 in der Gehäusewand sind im Bereich des Gewindes 22 ausgebildet. Dabei kann die Bohrung 52 für die Masseelektroden 5 und damit auch die Masseelektroden 5 auf jeder beliebigen Höhe im Bereich des Gewindes 22 angeordnet sein. Je nach der Position der Masseelektroden 5 im Bereich des Gewindes 22 ragt entsprechend die Mittelelektrode 4 und mit ihr auch der Isolatorfuß 31 mehr oder weniger weit in den Atmungsraum 81 hinein. Je nach gewünschten Verwendungszweck der Zündkerze 1 kann die Position der Bohrungen im Bereich des Gewindes 22 und der Masseelektroden 5 auf der Innenseite 23 des Gehäuses 2 gewählt werden.

Die Bohrungen 52 sind beispielsweise in jeweils einer Vertiefung 51, wie beispielsweise eine konische oder eine runde Nut, angeordnet. Dabei ist der Außendurchmesser des Gehäuses 2 in den Vertiefungen kleiner als der Kerndurchmesser des Gewindes 22.

Die Vertiefungen 51 können beispielsweise durch ein Stanzen des Gehäuses 2 bei der Herstellung der Zündkerze 1 entstehen. Dabei wird nicht nur der Außendurchmesser des Gehäuses 2 im Bereich der Vertiefungen 51 reduziert, sondern auch der Innendurchmesser des Gehäuses 2 im Bereich der Vertiefungen 51, so dass innerhalb des Gehäuses ein Vorsprung 26 je Vertiefung 51 entsteht.

Innerhalb des Gehäuses 2 gibt es einen Atmungsraum 81 mit einem Volumen. Der Atmungsraum 81 erstreckt sich von der brennraumseitigen Stirnseite 27 des Gehäuses bis ins Gehäuse 2 hinein und innerhalb des Gehäuses 2 bis zur Isolatorfußkehle, die an dem Isolatorsitz 35 angrenzt, der auf dem Gehäusesitz 25 aufliegt. Der Zwischenraum zwischen Gehäuse 2 und Isolator 3 ist an dieser Stelle mittels einer Innendichtung 10 gasdicht abgedichtet. Das Volumen der Masseelektroden 5, der Mittelelektrode 4 und des Isolatorfußes 31 werden bei der Berechnung des Atmungsraumvolumens abgezogen. Das Volumen des Atmungsraums 81 beträgt maximal 500 mm³.

Das Gehäuse 2 oder die Bohrungen 52 für die Masseelektroden 5 können von der Herstellung Rillen oder Riefen aufweisen, wodurch sich eine Oberflächenrauigkeit ergibt. Die Rillen und Riefen entstehen beispielsweise, wenn die Bohrungen am bzw. im Gehäuse 2 durch ein Drehprozess bearbeitet wird, bei dem Material vom Gehäuse 2 abgetragen wird.

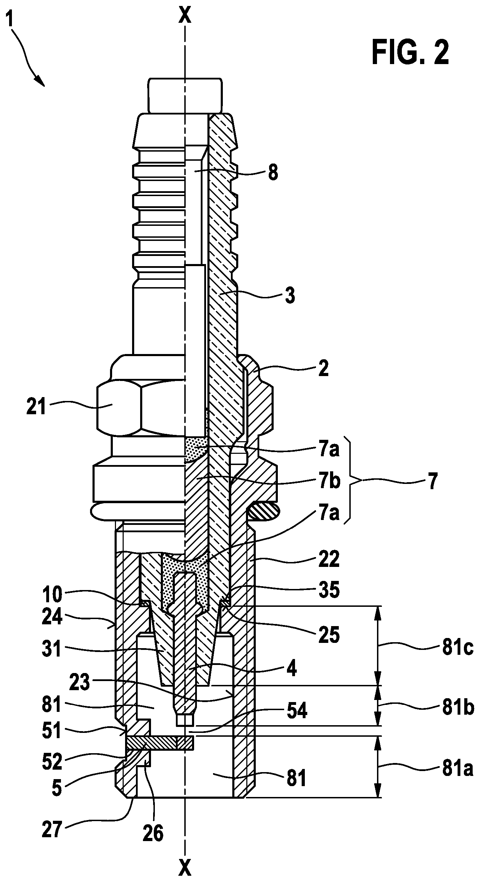

Figur 2 zeigt ein zweites Beispiel der erfindungsgemäßen Zündkerze 1. Dieses Beispiel unterscheidet sich vom ersten Beispiel durch die Anordnung der Masseelektrode 5. In diesem Beispiel ist die Masseelektrode 5 als sogenannte Dachelektrode in Bezug auf die Mittelelektrode 4 angeordnet. Der Zündspalt 54 zwischen der Mittelelektrode 4 und der Masseelektrode 5 erstreckt sich parallel zur Längsachse x. Die Breite des Zündspalts 54 ist der Elektrodenabstand parallel zur Längsachse x und liegt im Bereich von 0,05 mm bis 0,4 mm.

Das brennraumseitige Ende des axialen Zündspalts 54 wird von der Zündfläche der Masseelektrode 5 definiert. Entsprecht wird der Abstand 81a des Zündspalts 54 zur der von der brennraumseitigen Stirnseite 27 des Gehäuses 2 senkrecht zur Längsachse x aufgespannte Ebene gemessen.

Hier nicht gezeigt, aber möglich ist eine zweite Masseelektrode, die seitlich zu der Mittelelektrode 4 angeordnet ist und somit einen Zündspalt 54 radial zu Längsachse x ausbildet.

## Patentansprüche

1. Zündkerze (1) mit einer Längsachse, aufweisend
• ein Gehäuse (2) mit einer Bohrung entlang der Zündkerzen-Längsachse und einer brennraumseitigen Stirnseite (27), die das brennraumseitige Ende der Zündkerze ist, wobei die Zündkerze keine Kappe an der brennraumseitigen Stirnseite des Gehäuses aufweist,
• einen mindestens teilweise innerhalb des Gehäuses (2) angeordneten Isolator (3), wobei der Isolator einen Isolatorfuß (31) hat, der sich von einer brennraumseitigen Stirnfläche des Isolators (3) bis zu einer Isolatorfußkehle erstreckt,
• eine mindestens teilweise innerhalb des Isolators (3) angeordnete Mittelelektrode (4), und
• mindestens einer Masseelektrode (5), die am Gehäuse (2) angeordnet ist, wobei die mindestens eine Masseelektrode (5) und die Mittelelektrode (4) so angeordnet sind, dass die mindestens eine Masseelektrode (5) mit der Mittelelektrode (4) einen Zündspalt (54) ausbildet, wobei eine Breite des Zündspalts (54) durch einen Elektrodenabstand der Mittelelektrode (4) zu der mindestens einen Masseelektrode (5) gegeben ist,
**dadurch gekennzeichnet,**
**dass** der Elektrodenabstand der Mittelelektrode (4) zu der mindestens einen Masseelektrode (5) nicht größer als 0,4 mm ist, und
**dass** der Zündspalt (54) mindestens teilweise innerhalb des Gehäuses (2) ausgebildet ist.

2. Zündkerze (1) nach Anspruch 1, **dadurch gekennzeichnet, dass** der Elektrodenabstand nicht größer als 0,2 mm, insbesondere nicht größer als 0,15 mm ist.

3. Zündkerze (1) nach Anspruch 1 oder 2, **dadurch gekennzeichnet, dass** der Elektrodenabstand mindestens 0,05 mm ist, insbesondere nicht kleiner als 0,1 mm ist.

4. Zündkerze (1) nach einem der vorherigen Ansprüchen, **dadurch gekennzeichnet, dass** der Zündspalt (54) einen Abstand (81a) zur brennraumseitigen Stirnseite (27) des Gehäuses (2) von größer 0 mm und maximal -15 mm, insbesondere von nicht kleiner als -1 mm und/oder nicht größer als -4 mm, wobei eine von der brennraumseitigen Stirnseite (27) des Gehäuses (2) aufgespannte Ebene senkrecht zur Längsachse x der Zündkerze (1) eine Referenzebene mit dem Wert 0 mm ist und der Abstand (81a) von der Referenzebene in Richtung des brennraumabgewandten Endes der Zündkerze (1) einen zunehmend negativen Wert annimmt.

5. Zündkerze (1) nach einem der vorherigen Ansprüche, **dadurch gekennzeichnet, dass** der Isolatorfuß (31) eine Länge (81c) hat, die parallel zu Längsachse x der Zündkerze (1) gemessen wird, die nicht länger als 7 mm ist, insbesondere nicht länger als 4 mm ist.

6. Zündkerze (1) nach einem der vorherigen Ansprüchen, **dadurch gekennzeichnet, dass** die Mittelelektrode (4) aus dem Isolator (3) herausragt und, dass ein Vorstehmaß (81b) der Mittelelektrode (4), gemessen von der brennraumseitigen Stirnfläche des Isolators (3) bis zu einem brennraumseitigen Ende der Mittelelektrode (4), nicht größer ist als 6,0 mm und insbesondere nicht kleiner ist als 0,5 mm.

7. Zündkerze (1) nach einem der vorherigen Ansprüche, **dadurch gekennzeichnet, dass** die Zündkerze (1) eine Atmungsraum (81) aufweist, der sich innerhalb des Gehäuses (2) von der brennraumseitigen Stirnseite (27) des Gehäuses (2) bis zur Isolatorfußkehle erstreckt, wobei die Mittelelektrode (4) und der Isolatorfuß (31) innerhalb des Atmungsraums (81) und die mindestens eine Masseelektrode (5) mindestens teilweise, insbesondere vollständig, innerhalb des Atmungsraums (81) angeordnet sind, und dass der Atmungsraum (81) ein Volumen von nicht größer als 500 mm³, insbesondere von nicht größer als 300 mm³, und insbesondere nicht kleiner als 50 mm³.

8. Zündkerze (1) nach einem der vorherigen Ansprüche, **dadurch gekennzeichnet, dass** die Zündkerze (1) eine mindestens zwei Masseelektroden (5) aufweist, die jeweils einen Zündspalt (54) mit der Mittelelektrode (4) ausbilden, wobei insbesondere die Masseelektroden (5) symmetrisch um die Mittelelektrode (4) herum angeordnet sind.

9. Zündkerze (1) nach einem der vorherigen Ansprüche, **dadurch gekennzeichnet, dass** die mindestens eine Masseelektrode (5) und/oder die Mittelelektrode (4) je eine Zündfläche aufweisen, die mit der gegenüberliegenden Elektrode den Zündspalt (54) bilden, und dass die Zündfläche(n) aus einem Edelmetall oder einer Edelmetalllegierung besteht, insbesondere aus Pt, Ir, Rh, Pd, Re, Au oder einer Legierung daraus

10. Zündkerze (1) nach einem der vorherigen Ansprüche, **dadurch gekennzeichnet, dass** die Zündkerze (1) eine Wasserstoff-Zündkerze ist, die dazu eingerichtet ist in einem mit Wasserstoff betriebenen Motor eingesetzt zu werden und das zündfähige Wasserstoff enthaltende Kraftstoff-Luft-Gemisch zu zünden.

## Claims

1. Spark plug (1) with a longitudinal axis, having
• a housing (2) with a bore along the longitudinal axis of the spark plug and a combustion-chamber-side end face (27), which is the combustion-chamber-side end of the spark plug, wherein the spark plug does not have a cap on the combustion-chamber-side end face of the housing,
• an insulator (3) arranged at least partially within the housing (2), wherein the insulator has an insulator base (31) that extends from a combustion-chamber-side end face of the insulator (3) to an insulator base groove,
• a centre electrode (4) arranged at least partially within the insulator (3), and
• at least one earth electrode (5) that is arranged on the housing (2), wherein the at least one earth electrode (5) and the centre electrode (4) are arranged in such a way that the at least one earth electrode (5) forms a spark gap (54) with the centre electrode (4), wherein a width of the spark gap (54) is determined by an electrode spacing between the centre electrode (4) and the at least one earth electrode (5),
**characterized**
**in that** the electrode spacing between the centre electrode (4) and the at least one earth electrode (5) is not greater than 0.4 mm, and
**in that** the spark gap (54) is formed at least partially within the housing (2).

2. Spark plug (1) according to Claim 1, **characterized in that** the electrode spacing is not greater than 0.2 mm, in particular not greater than 0.15 mm.

3. Spark plug (1) according to Claim 1 or 2, **characterized in that** the electrode spacing is at least 0.05 mm, in particular not less than 0.1 mm.

4. Spark plug (1) according to one of the preceding claims, **characterized in that** the spark gap (54) has a spacing (81a) with respect to the combustion-chamber-side end face (27) of the housing (2) of greater than 0 mm and of at most -15 mm, in particular of not less than -1 mm and/or not greater than -4 mm, wherein a plane spanned by the combustion-chamber-side end face (27) of the housing (2) perpendicular to the longitudinal axis x of the spark plug (1) is a reference plane with the value 0 mm and the spacing (81a) from the reference plane in the direction of that end of the spark plug (1) that is averted from the combustion space assumes an increasingly negative value.

5. Spark plug (1) according to one of the preceding claims, **characterized in that** the insulator base (31) has a length (81c), which is measured parallel to the longitudinal axis x of the spark plug (1), that is not longer than 7 mm, in particular not longer than 4 mm.

6. Spark plug (1) according to one of the preceding claims, **characterized in that** the centre electrode (4) projects from the insulator (3) and **in that** a protrusion dimension (81 b) of the centre electrode (4), measured from the combustion-chamber-side end face of the insulator (3) to a combustion-chamber-side end of the centre electrode (4), is not greater than 6.0 mm and in particular is not less than 0.5 mm.

7. Spark plug (1) according to one of the preceding claims, **characterized in that** the spark plug (1) has a breathing space (81) that extends within the housing (2) from the combustion-chamber-side end face (27) of the housing (2) to the insulator base groove, wherein the centre electrode (4) and the insulator base (31) are arranged within the breathing space (81) and the at least one earth electrode (5) is arranged at least partially, in particular completely, within the breathing space (81), and **in that** the breathing space (81) has a volume not greater than 500 mm³, in particular not greater than 300 mm³, and in particular not less than 50 mm³.

8. Spark plug (1) according to one of the preceding claims, **characterized in that** the spark plug (1) has at least two earth electrodes (5), each of which form a spark gap (54) with the centre electrode (4), wherein the earth electrodes (5) are in particular arranged symmetrically around the centre electrode (4).

9. Spark plug (1) according to one of the preceding claims, **characterized in that** the at least one earth electrode (5) and/or the centre electrode (4) each have an ignition surface, which form the spark gap (54) with the opposite electrode, and **in that** the ignition surface or surfaces consists/consist of a precious metal or a precious metal alloy, in particular of Pt, Ir, Rh, Pd, Re, Au or an alloy thereof.

10. Spark plug (1) according to one of the preceding claims, **characterized in that** the spark plug (1) is a hydrogen spark plug that is configured to be used in a hydrogen-powered engine and to ignite the ignitable hydrogen-containing fuel/air mixture.

## Revendications

1. Bougie d'allumage (1) ayant un axe longitudinal X, comprenant
• un boîtier (2) avec un alésage le long de l'axe longitudinal de la bougie d'allumage et un côté frontal (27) côté chambre de combustion, qui est l'extrémité côté chambre de combustion de la bougie d'allumage, la bougie d'allumage ne possédant pas de capuchon au niveau du côté frontal côté chambre de combustion du boîtier,
• un isolateur (3) disposé au moins partiellement à l'intérieur du boîtier (2), l'isolateur ayant un pied d'isolateur (31) qui s'étend d'une surface frontale côté chambre de combustion de l'isolateur (3) jusqu'à une gorge du pied d'isolateur,
• une électrode centrale (4) disposée au moins partiellement à l'intérieur de l'isolateur (3), et
• au moins une électrode de masse (5) qui est disposée sur le boîtier (2), l'au moins une électrode de masse (5) et l'électrode centrale (4) étant disposées de telle sorte que l'au moins une électrode de masse (5) forme avec l'électrode centrale (4) une fente d'allumage (54), une largeur de la fente d'allumage (54) étant donnée par un écartement d'électrodes entre l'électrode centrale (4) et l'au moins une électrode de masse (5),
**caractérisée en ce que**
l'écartement d'électrodes entre l'électrode centrale (4) et l'au moins une électrode de masse (5) n'est pas supérieur à 0,4 mm, et
la fente d'allumage (54) est au moins partiellement formée à l'intérieur du boîtier (2).

2. Bougie d'allumage (1) selon la revendication 1, **caractérisée en ce que** l'écartement d'électrodes n'est pas supérieur à 0,2 mm, en particulier pas supérieur à 0,15 mm.

3. Bougie d'allumage (1) selon la revendication 1 ou 2, **caractérisée en ce que** l'écartement d'électrodes est d'au moins 0,05 mm, en particulier est non inférieur à 0,1 mm.

4. Bougie d'allumage (1) selon l'une des revendications précédentes, **caractérisée en ce que** la fente d'allumage (54) présente un écart (81a) par rapport au côté frontal côté chambre de combustion (27) du boîtier (2) supérieur à 0 mm et maximal de -15 mm, en particulier non inférieur à -1 mm et/ou non supérieur à -4 mm, un plan défini par le côté frontal côté chambre de combustion (27) du boîtier (2) perpendiculairement à l'axe longitudinal x de la bougie d'allumage (1) étant un plan de référence ayant la valeur 0 mm et l'écart (81a) par rapport au plan de référence en direction de l'extrémité de la bougie d'allumage (1) opposée à la chambre de combustion prenant une valeur de plus en plus négative.

5. Bougie d'allumage (1) selon l'une des revendications précédentes, **caractérisée en ce que** le pied d'isolateur (31) a une longueur (81c), mesurée parallèlement à l'axe longitudinal x de la bougie d'allumage (1), qui n'est pas supérieure à 7 mm, en particulier pas supérieure à 4 mm.

6. Bougie d'allumage (1) selon l'une des revendications précédentes, **caractérisée en ce que** l'électrode centrale (4) fait saillie hors de l'isolateur (3) et **en ce qu'**une cote de saillie (81 b) de l'électrode centrale (4), mesurée de la surface frontale côté chambre de combustion de l'isolateur (3) à une extrémité côté chambre de combustion de l'électrode centrale (4), n'est pas supérieure à 6,0 mm et notamment n'est pas inférieure à 0,5 mm.

7. Bougie d'allumage (1) selon l'une des revendications précédentes, **caractérisée en ce que** la bougie d'allumage (1) présente un espace de respiration (81) qui s'étend à l'intérieur du boîtier (2) du côté frontal (27) côté chambre de combustion du boîtier (2) jusqu'à la gorge du pied d'isolateur, l'électrode centrale (4) et le pied d'isolateur (31) étant disposés à l'intérieur de l'espace de respiration (81) et l'au moins une électrode de masse (5) étant disposée au moins partiellement, en particulier entièrement, à l'intérieur de l'espace d'échange (81), et **en ce que** l'espace d'échange (81) présente un volume non supérieur à 500 mm³, en particulier non supérieur à 300 mm³, et en particulier non inférieur à 50 mm³.

8. Bougie d'allumage (1) selon l'une des revendications précédentes, **caractérisée en ce que** la bougie d'allumage (1) possède au moins deux électrodes de masse (5) qui forment respectivement une fente d'allumage (54) avec l'électrode centrale (4), les électrodes de masse (5) notamment étant disposées symétriquement autour de l'électrode centrale (4).

9. Bougie d'allumage (1) selon l'une des revendications précédentes, **caractérisée en ce que** l'au moins une électrode de masse (5) et/ou l'électrode centrale (4) possèdent chacune une surface d'allumage qui, avec l'électrode opposée, forme la fente d'allumage (54) et **en ce que** la ou les surfaces d'allumage sont constituées d'un métal noble ou d'un alliage de métaux nobles, en particulier de Pt, Ir, Rh, Pd, Re, Au ou d'un alliage de ceux-ci.

10. Bougie d'allumage (1) selon l'une des revendications précédentes, **caractérisée en ce que** la bougie d'allumage (1) est une bougie d'allumage à hydrogène qui est conçue pour être utilisée dans un moteur fonctionnant à l'hydrogène et pour allumer le mélange air-carburant contenant de l'hydrogène inflammable.
